# EUROPEAN PATENT APPLICATION

(11) **EP 2 723 043 A1**
(43) Date of publication of application: **23.04.2014**
(21) Application number: 13185789.8
(22) Date of filing: 24.09.2013
(51) Int. Cl.: H04L 29/08, H04W 4/00, H04L 29/06

(54) **In-vehicle entertainment system for providing program source data to a portable electronic device**

(30) Priority: 16.10.2012 US 201213652566
(71) Applicant: Delphi Technologies, Inc., Troy MI 48007 (US)
(72) Inventor: Kelly, Philipp W., Kokomo, IN Indiana 46901 (US)
(74) Representative: Neill, Andrew Peter

(57) **Abstract**

An in-vehicle entertainment system (12) that includes a receiver (14) and a server (16). The receiver (14) receives one or more data streams (18) from one or more broadcasters. The server (16) communicates with the receiver (14) and a portable electronic device (PED (24)) proximate to the vehicle (10). The PED (24) is operable to select a program source for playback on the PED (24) from the one or more data streams (18) provided by the receiver (14). The server (16) includes memory (32) to store program content. The PED (24) is also operable to select a program source for playback on the PED (24) from the program content stored by the memory (32).

## Description

### TECHNICAL FIELD OF INVENTION

This disclosure generally relates to in-vehicle entertainment systems, and more particularly relates to an in-vehicle entertainment system that communicates with a portable electronic device (PED) to provide the PED with program source data for playback in the PED.

### BACKGROUND OF INVENTION

Many present day in-vehicle entertainment systems include an in-dash mounted radio frequency (RF) receiver, CD/DVD player, and a universal serial bus (USB) port for the system to download program source data from a thumb drive or similar memory device. A vehicle passenger may use portable electronic device (PED) such as smart phone, tablet, or media player (e.g. an I-POD®) to access program source data previously stored on the PED.

### SUMMARY OF THE INVENTION

In accordance with one embodiment, an in-vehicle entertainment system is provided. The system includes a receiver, a server, and memory. The receiver is configured to receive one or more data streams from one or more broadcasters. The server is configured to communicate with the receiver and a portable electronic device (PED) proximate to the vehicle. The PED is operable to select a program source for playback on the PED from the one or more data streams provided by the receiver. The memory is configured to store program content. The PED is also operable to select a program source for playback on the PED from the program content stored by the memory.

Further features and advantages will appear more clearly on a reading of the following detailed description of the preferred embodiment, which is given by way of non-limiting example only and with reference to the accompanying drawings.

### BRIEF DESCRIPTION OF DRAWINGS

The present invention will now be described, by way of example with reference to the accompanying drawings, in which:
Fig. 1 is a top cut-away view of a vehicle equipped with an in-vehicle entertainment system in accordance with one embodiment; and
Fig. 2 is diagram of the in-vehicle entertainment system of Fig. 1 in accordance with one embodiment.

### DETAILED DESCRIPTION

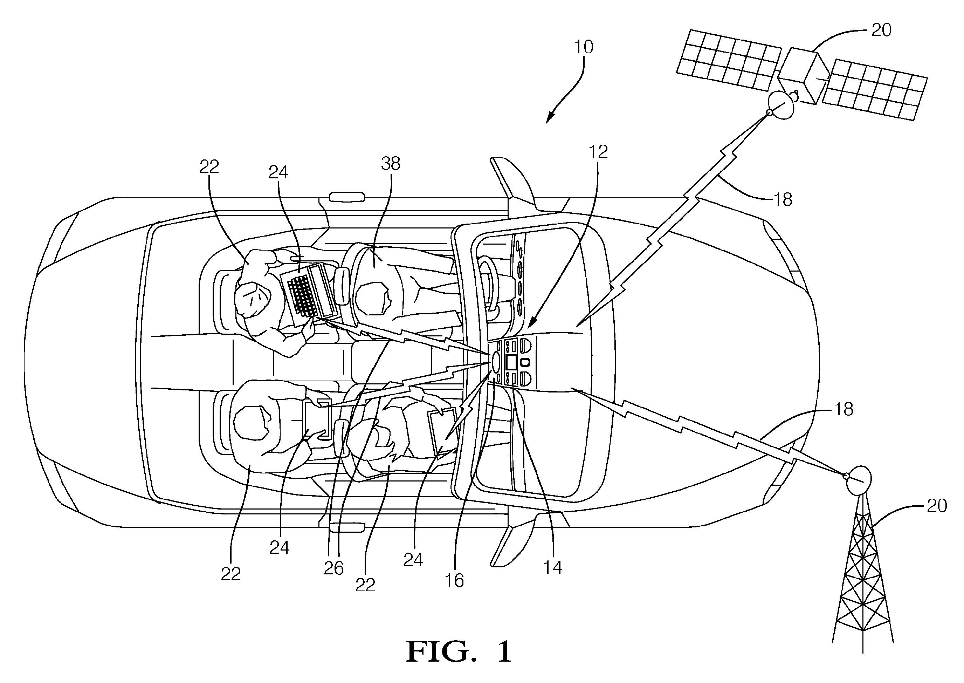

Fig. 1 illustrates a non-limiting example of a vehicle 10 equipped with an in-vehicle entertainment system, hereafter the system 12. In general, the system 12 includes a receiver 14 and a server 16. The receiver 14 is generally configured to receive one or more data streams 18 from one or more broadcasters illustrated herein as broadcast antenna 20. The data streams 18 may be audio and/or video broadcasts, and may include associated meta-data such as, but not limited to, text and graphics that supplement the program material or Hyper-Text Markup Language (HTML/HTML5) code for applications. The broadcast antenna 20 may be ground based, or may be a satellite. As will be explained in more detail below, the system 12 is configured to allow one or more passengers 22 operating one or more portable electronic devices (PED) 24 to receive individually selected program material from the broadcasters via the receiver 14, or from other sources. The PED 24 may be, but are not limited to a smart phone, tablet, or media player, e.g. an IPOD®. In order for the PED 24 to receive the program material that the passenger 22 desires, a communication link 26 is established between the server 16 and the PED 24.

The system 12 may be characterized as appearing to run a web server inside the receiver 14, with a WIFI® application. The application would serve up an operating environment using, for example, a HTML or HTML5 user interface to each PED 24, thereby allowing or providing a "virtual radio" displayed in a browser, and audio streamed for consumption via, for example, headphones connected to the PED 24. These virtual radios can then use the other radio tuners / sources that are not being used by the main cabin, and access other information and controls. The system 12 may also serve-up HTML5 interactive games and use the navigation system information for educational purposes.

The system 12 advantageously allows multiple users to have their own personalized radio, instead of being forced to listen to the main cabin choices, without pre-purchase of Rear Seat Audio / Video (RSAV) systems, and allows for more than two RSAV users. The system 12 may also provide for other passengers to interact with the infotainment system for the driver, reducing driver distraction (e.g. - set audio source, set navigation destination, etc.).

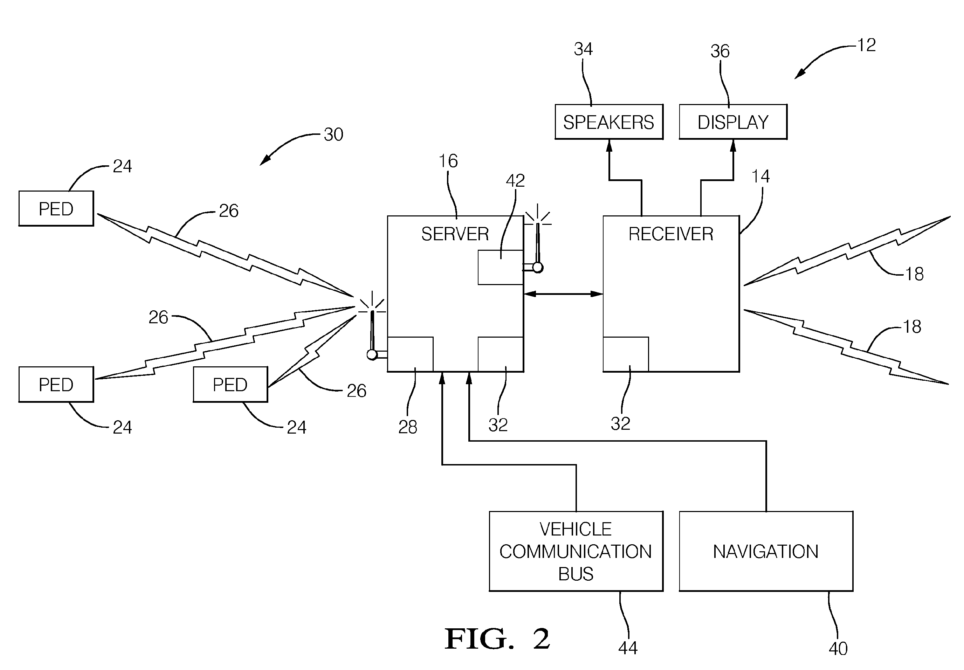

Fig. 2 further illustrates non-limiting details of the system 12. In one embodiment, the server 16 includes a router transceiver 28 configured to establish or provide a wireless network 30 that communicates with the PED 24 proximate to or inside the vehicle 10 via the communication link 26. As used herein, a 'router transceiver' is a device configured to route or control the flow of data such as internet protocol data from a client device such as the server to one or more host devices such as the PED. A wireless router transceiver may be preferable as it avoids the expense and complication of providing a wired connection between the PED 28 and the server 16. In addition, a wireless router transceiver could allow a PED located outside the vehicle 10 to communicate with the server 16. However, if greater security is desired, a wired connection between the PED 24 and the server 16 may be preferred. In either case, the PED 24 is operable to select a program source for playback on the PED from the one or more data streams 18 received by the receiver 14

The receiver 14, or the server 16, or both the receiver 14 and the server 16, may include various types of memory 32 for storing program material such as music, video entertainment, games, vehicle operating instructions, or personal information. The memory 32 may be a universal serial bus (USB) thumb drive, internal electronic memory, or an optical disk reader such as a CD/DVD player. In general, the memory 32 is configured to store program content that the PED 24 can access to select a program source for playback on the PED. As such, each PED 24 can receive a program source independent of the other and so can select a unique program source such as a broadcast available from the receiver 14 or a program source from the server 16 for playback. It is recognized that the number of different broadcasts that can be received by the receiver 14 may be limited by the number of tuners (not shown) within the receiver 14, and the format of the data streams 18.

The system 12 may include a cabin entertainment device such as cabin speakers 34, or a display screen 36. As such, the receiver 14 and/or the server 16 may be able to, or be operable, to select a program source for playback on the cabin entertainment device from program content available from the receiver 14 or the server 16. Typically, such operation of the receiver 14 would be by the operator 38 (Fig. 1) of the vehicle 10. However, the system 12 described herein also provides for the PED 24 to output control commands and communicate those control commands via the communication link 26 to the server 16. Accordingly, the server 16 is configured to receive control commands from the PED 24 effective to control the cabin entertainment device. For example, the PED being operated by the passenger 22 in the rear seat of the vehicle 10 would be able to change what music or program is being output by the speakers 34 or the display 36.

The system 12 may include a navigation device 40 (i.e. global positioning system or GPS) operable to provide navigation information to the vehicle operator 38. Typically, operation of the navigation device 40 would be by the operator 38 of the vehicle 10. However, the system 12 described herein also provides for the PED 24 to output navigation commands and communicate those navigation commands via the communication link 26 to the server 16. Accordingly, the server 16 is configured to receive navigation commands from the PED 24 effective to control the navigation information output by the navigation device. For example, if the operator 38 wants to stop to get something to eat, the passenger 22 in the rear seat of the vehicle would be able to operate the navigation system to find a restaurant, and designate that restaurant as a destination in order to provide the operator 38 with directions to the restaurant.

The system 12 may include an internet transceiver 42 so that the server 16 can communicate with an internet server (not shown) outside of the vehicle 10. The internet transceiver 42 may be a WI-FI® type transceiver, and so may have limited usefulness if the vehicle 10 is traveling in a rural area. Alternatively, the internet transceiver 42 may be configured to communicate with a satellite or a terrestrial wide area network, and so many of the intermittent service problems may be avoided.

The server may be coupled to a vehicle communication bus 44 so the server 16 and gather and communicate vehicle information from the vehicle communication bus 44 for playback on the PED 24. By way of example, the passenger 22 in the rear seat of the vehicle would be able to monitor fuel level, vehicle range, tire pressure or other vehicle operating indicators and, for example, perform a study of fuel consumption during a family trip for educational purposes.

Accordingly, an in-vehicle entertainment system (the system 12) is provided. The system 12 advantageously allows the receiver 14 to include multiple RSAV systems, without incurring the cost of such systems. The system 12 provides a driver distraction advantage by letting others interact with the navigation and audio systems instead of the driver. In addition, if the main infotainment screen is replaced with a border-less web browser, the same HTML content can be used for the front screen as we do for the "virtualized systems", thereby reducing the cost and providing greater flexibility to various customers.

While this invention has been described in terms of the preferred embodiments thereof, it is not intended to be so limited, but rather only to the extent set forth in the claims that follow.

## Claims

1. An in-vehicle entertainment system (12) comprising:
a receiver (14) configured to receive one or more data streams (18) from one or more broadcasters;
a server (16) configured to communicate with the receiver (14) and a portable electronic device (PED (24)) proximate to the vehicle (10) such that the PED (24) is operable to select a program source for playback on the PED (24) from the one or more data streams (18) provided by the receiver (14); and
a memory (32) configured to store program content, wherein the PED (24) is also operable to select a program source for playback on the PED (24) from the program content stored by the memory (32).

2. The system (12) in accordance with claim 1, wherein the server (16) includes a router transceiver (28) configured to provide a wireless network (30) proximate to the vehicle (10).

3. The system (12) in accordance with claim 1, wherein the server (16) is configured to communicate with a plurality of PED (24) such that each individual PED (24) is independently operable to select a program source for playback on the individual PED (24).

4. The system (12) in accordance with claim 1, wherein the system (12) includes a cabin entertainment device operable to select a program source for playback on the cabin entertainment device from program content available from the receiver (14) or the server (16), and wherein the server (16) is configured to receive control commands from the PED (24) effective to control the cabin entertainment device.

5. The system (12) in accordance with claim 1, wherein the system (12) includes a navigation device (40) operable to provide navigation information to a vehicle operator (38), and wherein the server (16) is configured to receive navigation commands from the PED (24) effective to control the navigation information output by the navigation device (40).

6. The system (12) in accordance with claim 1, wherein the server (16) includes an internet transceiver (42) configured to communicate with an internet server (16).

7. The system (12) in accordance with claim 1, wherein the server (16) is coupled to a vehicle communication bus (44), and configured to communicate vehicle (10) information from the vehicle communication bus (44) for playback on the PED (24).

8. The system (12) in accordance with claim 7, wherein the vehicle (10) information includes at least one of fuel level, vehicle (10) range, and tire pressure.
